## Europäisches Patentamt
## European Patent Office
## Office européen des brevets

(19)

(11) Numéro de publication: **0 237 399**
**B1**

(12)

# FASCICULE DE BREVET EUROPEEN

(45) Date de publication du fascicule du brevet:
**16.08.89**

(51) Int. Cl.⁴: **A47J 31/40**

(21) Numéro de dépôt: **87400412.0**

(22) Date de dépôt: **24.02.87**

(54) Dispositif pour la percolation automatique et instantanée de liquides alimentaires.

(30) Priorité: **26.02.86 FR 8602636**
**26.02.86 FR 8602637**

(43) Date de publication de la demande:
**16.09.87 Bulletin 87/38**

(45) Mention de la délivrance du brevet:
**16.08.89 Bulletin 89/33**

(84) Etats contractants désignés:
**AT BE CH DE ES GB GR IT LI LU NL SE**

(56) Documents cités:
**EP-A- 0 117 583**
**CH-A- 521 115**
**CH-A- 635 740**
**DE-A- 2 053 466**
**FR-A- 2 156 467**
**FR-A- 2 202 668**
**FR-A- 2 226 137**
**FR-A- 2 338 028**
**US-A- 2 617 010**
**US-A- 4 419 302**

(73) Titulaire: **Versini, Rolland, La Rouvière 83 Bld. du Rodon, F-13000 Marseille(FR)**

(72) Inventeur: **Versini, Rolland, La Rouvière 83 Bld. du Rodon, F-13000 Marseille(FR)**

(74) Mandataire: **Roman, Michel, CABINET ROMAN 35, rue Paradis, F-13001 Marseille(FR)**

ACTORUM AG

## Description

La présente invention concerne un dispositif conforme au préambule de la revendication 1, permettant la production automatique par percolation de liquides alimentaires et notamment de boissons chaudes telles que le café obtenu par passage d'eau à température convenable à travers un lit de produits aromatiques à l'état pulvérulent tel que du café moulu.

Un tel dispositif est décrit dans le CH-A 521 155. L'invention vise à permettre la réalisation, dans des conditions entièrement automatiques et sans intervention humaine, notamment sans intervention d'un personnel de service ou de l'utilisateur, autre que l'envoi d'un signal de commande initial, d'une boisson chaude telle qu'un café du type "express" c'est-à-dire délivré et mis à la disposition du consommateur immédiatement au sortir de la phase de percolation.

A cet effet, l'invention concerne un dispositif pour la percolation automatique et instantanée de liquides alimentaires et aptes à être débité par doses correspondant à une unité de consommation ou à un multiple de cette unité, du type comportant une chambre de percolation ouverte par une face, une réserve de produits aromatiques de percolation et des moyens de déversement desdits produits dans ladite chambre, un piston d'obturation apte à obturer la face ouverte de ladite chambre en comprimant la dose unitaire de produits de percolation contenus dans ladite chambre étant apte à recevoir une source de liquide, notamment d'eau à température convenable, ladite chambre comportant un lit de filtration pourvu d'ouvertures pour le passage du liquide percolé vers une évacuation, un fond de ladite chambre étant monté mobile et étant relié à cet effet à des moyens d'entraînement, le piston d'obturation de la chambre d'une part et le fond mobile d'autre part étant prévus avec des courses de déplacement d'axes colinéaires entre eux et colinéaires avec l'axe de la chambre, le piston d'obturation et le fond mobile étant entraînés dans au moins une partie de leurs mouvements, par un organe de manœuvre unique et commun respectivement au piston et au fond mobile, ce dernier étant monté solidaire d'un socle apte à se déplacer verticalement le long d'organes de guidage, fixes solidaires du bâti, ledit socle étant apte à être couplé par des moyens de solidarisation à embrayage automatique à l'organe commun de déplacement, ceci pour une course limitée correspondant au déplacement dudit fond dans la chambre depuis sa position de repos vers la face ouverte de la chambre en vue de l'éjection du gâteau de filtration, le dispositif étant caractérisé en ce qu'il comporte un organe de rappel constitué d'un organe de déplacement auxiliaire dont la course est symétrique de celle de l'organe de déplacement principal, les deux organes de déplacement symétriques étant entraînés par un organe de manœuvre commun tel qu'un pignon embrayant sur les deux organes de déplacement, entraînés dans un mouvement symétrique inverse l'un de l'autre, ledit organe de déplacement auxiliaire étant apte à repousser le socle et le fond mobile pour les ramener en position de repos.

D'autres caractéristiques et avantages de l'invention ressortiront de la description qui suit et qui est donnée en rapport avec une forme de réalisation particulière sans caractère limitatif et en se référant aux dessins annexés.

La figure 1 représente une vue en coupe verticale d'une machine réalisée selon l'invention, le piston d'obturation étant en position haute dégagée et le fond de filtration étant en position de repos dans le fond de la chambre de percolation.

La figure 2 représente une vue en coupe verticale selon la ligne II-II de la figure 1.

La figure 3 représente une vue en coupe horizontale selon la ligne III-III de la figure 1.

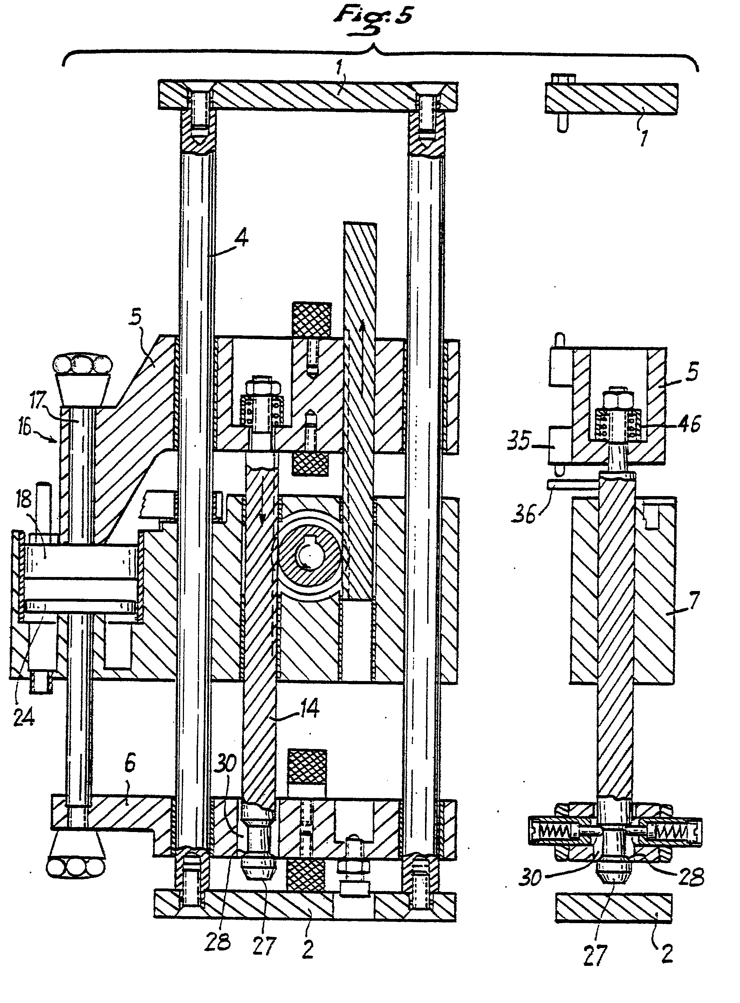

La figure 4 montre une vue de détail de l'entraînement de la racle de balayage.

La figure 5 représente une vue en coupe verticale de la machine, identique à la figure 1 mais montrant le piston d'obturation en position descendue lors de la phase de percolation.

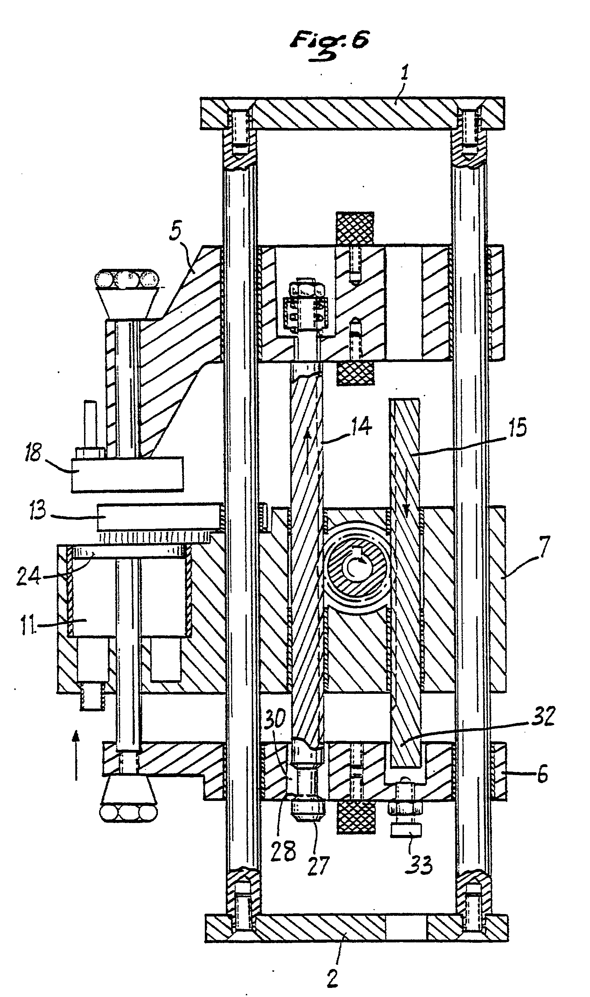

La figure 6 montre la vue en coupe verticale identique à la figure 1 et à la figure 3, le piston étant amené en position dégagée et le fond étant en position remontée pour l'éjection du gâteau.

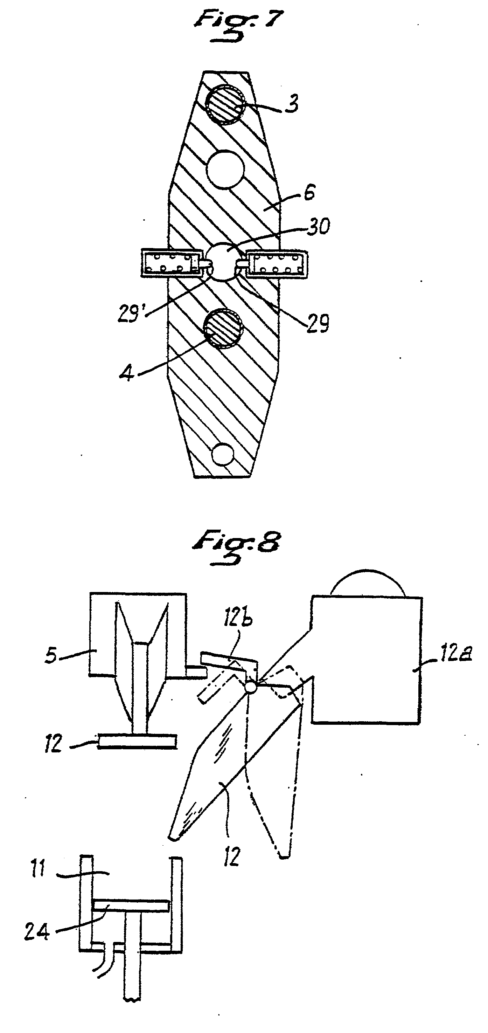

La figure 7 montre une vue en plan de détail du socle inférieur et du dispositif d'embrayage sur la crémaillère.

La figure 8 représente un schéma de principe du fonctionnement du cône de déversement effaçable pour le remplissage de la chambre de percolation en dose de café.

La figure 9 représente le schéma d'une source de vapeur incorporée à la machine selon l'invention.

Selon l'ensemble des figures on voit que l'appareil est constitué d'un bâti fixe ici formé par exemple d'une carcasse construite à partir des deux platines respectivement supérieure 1 et inférieure 2 entre lesquelles sont montées les colonnes verticales formant colonnes de guidage 3 et 4.

Sur ce bâti fixe sont montés mobiles deux socles respectivement un socle supérieur 5 et un socle inférieur 6.

Les deux socles sont montés à déplacement vertical étant guidés par les colonnes respectivement 3 et 4 engagées dans les alésages par exemple à frottement doux (téflonnés) prévus sur chacun des socles.

En position sensiblement médiane et monté fixe sur les colonnes se trouve le bloc intermédiaire 7 solidaire des colonnes et supportant le bloc moteur 8 par exemple formé d'un moteur électrique à mouvement réversible et dont l'arbre de sortie 9 porte le pignon d'engrenage 10.

Le bloc fixe monté sur le bâti par l'intermédiaire des colonnes supporte dans sa partie avant la chambre de percolation constituée d'un logement cylindrique 11.

Le bloc fixe 7 supporte également les organes de déversement dans la chambre de percolation des produits aromatiques solides c'est-à-dire de la poudre ou du café moulu en début du cycle ainsi que les organes d'évacuation du gateau de filtration en fin de cycle.

Ces organes sont constitués d'un cône de déversement 12 recevant le café en poudre depuis une réserve (décrite ci-après) par l'intermédiaire d'un dispositif doseur.

Et le socle 7 supporte également la racle 13 qui permet, par son mouvement de balayage latéral, l'évacuation du gateau de filtration en fin de cycle, le gateau ayant été remonté par l'élévation du fond de filtration comme ultérieurement exposé.

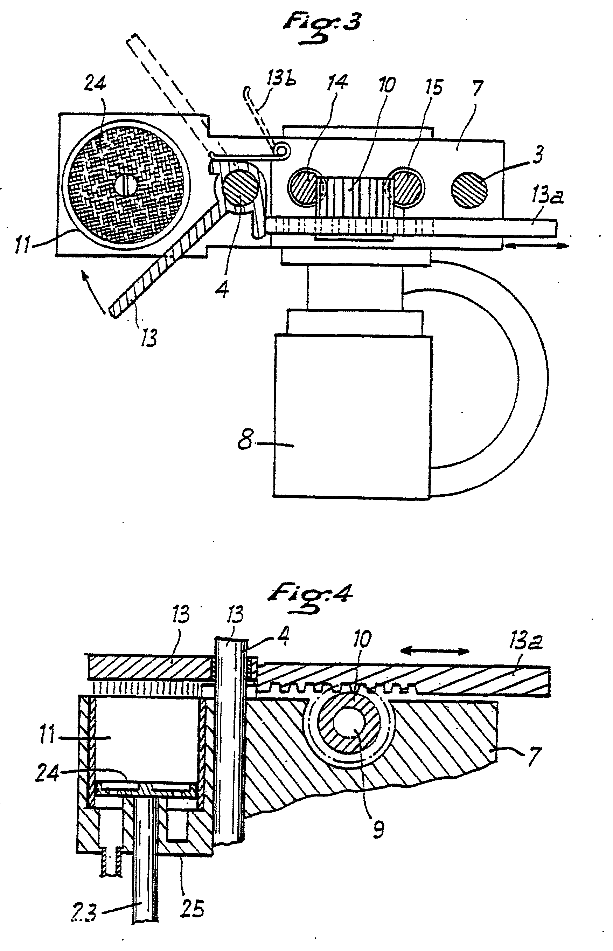

La racle 13 est entraînée dans un mouvement de balayage latéral angulaire à partir d'un axe d'articulation fixe constitué par la colonne 4, de sorte que dans un premier temps la racle 13 balaye le sommet de la chambre de percolation 11 en évacuant latéralement le gateau de filtration précédent ; la racle 13 est entraînée par la tige à crémaillère 13a actionnée elle-même par le pignon 10, l'ensemble étant réglé pour que le balayage par la racle intervienne pour la position remontée du fond 24 et l'extraction du gateau filtré; lors du retour en arrière de la crémaillère 13a, la racle est rappelée vers sa position initiale (en trait plein sur la figure 3) effacée latéralement par rapport à la chambre de percolation 11, par le ressort de rappel 13b.

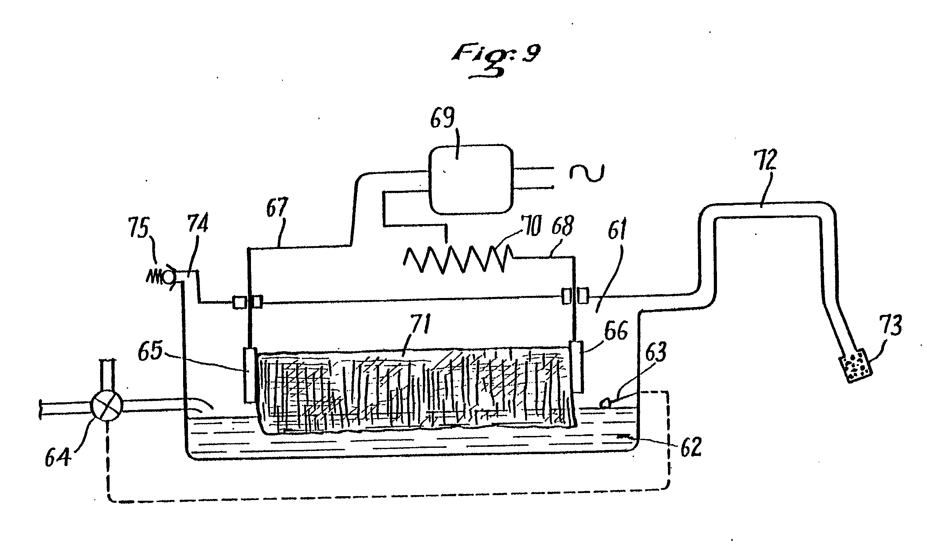

Le cône (ou segment de cône) de remplissage 12 (selon la figure 8) est monté à pivotement libre sur le dispositif doseur 12a et il est mis en position active de déversement par action du socle supérieur 5 en position haute par le bras de levier 12b ; lors du retour inférieur du socle 5 (et du piston 16-18) le cône de déversement est rappelé vers sa position effacée (en pointillés sur le dessin) par simple gravité.

Le bloc 7 est percé d'un alésage horizontal pour permettre le logement du pignon 10.

Ce bloc est également percé de deux alésages verticaux pour permettre le passage et le déplacement de deux organes d'entraînement symétrique à savoir un organe d'entraînement principal constitué d'une première crémaillère 14 et un organe d'entraînement secondaire constitué de la crémaillère 15 symétrique de la précédente, les deux crémaillères étant montées sur deux côtés diamètralement opposés du pignon 10 de sorte que dans un mouvement d'entraînement déterminé du pignon les deux crémaillères suivent des parcours respectivement inversés.

Sur la partie supérieure de la première crémaillère 14 est monté solidair le socle supérieur mobile 5 apte à coulisser, comme exposé précédemment, sur les deux colonnes de guidage respectivement 3 et 4.

Le socle supérieur 5 comporte, monté solidaire sur la partie avant du socle un piston d'obturation 16 formé d'une tige 17 solidaire du socle 5 et d'un plateau horizontal 18 dont la circonférence est prévue pour permettre son engagement avec un faible jeu à l'intérieur de la partie supérieure de la chambre de percolation 11.

De façon connue en soi la paroi du plateau 18 est reliée par une ou plusieurs embouchures 22,22' avec une source d'eau chaude à la température convenable (par le conduit 22").

A la partie inférieure de l'appareil se trouve le socle inférieur 6 sur la partie avant duquel est montée la tige 23 solidaire du fond de filtration 24 situé et monté mobile à l'intérieur de la chambre de percolation 11.

La paroi horizontale constituant le fond de filtration 24 est donc mobile avec le déplacement vertical du socle mobile 6 dans les conditions qui seront décrites ci-après.

En partie inférieure la chambre est obturée par le fond 25 qui contient le collecteur 26 du liquide de percolation avant de traverser le fond de filtration, le liquide étant évacué à l'extérieur par un bec de déversement depuis le passage 26' ; un alésage central dans la paroi d'obturation inférieure 25 permet le passage et le mouvement de la tige 23 pour le mouvement d'élèvation ou de redescente du fond de filtration 24.

Le fonctionnement de l'ensemble du dispositif peut être décrit comme suit, à partir de l'organe moteur constitué par le moteur électrique 8 et le pignon central 10.

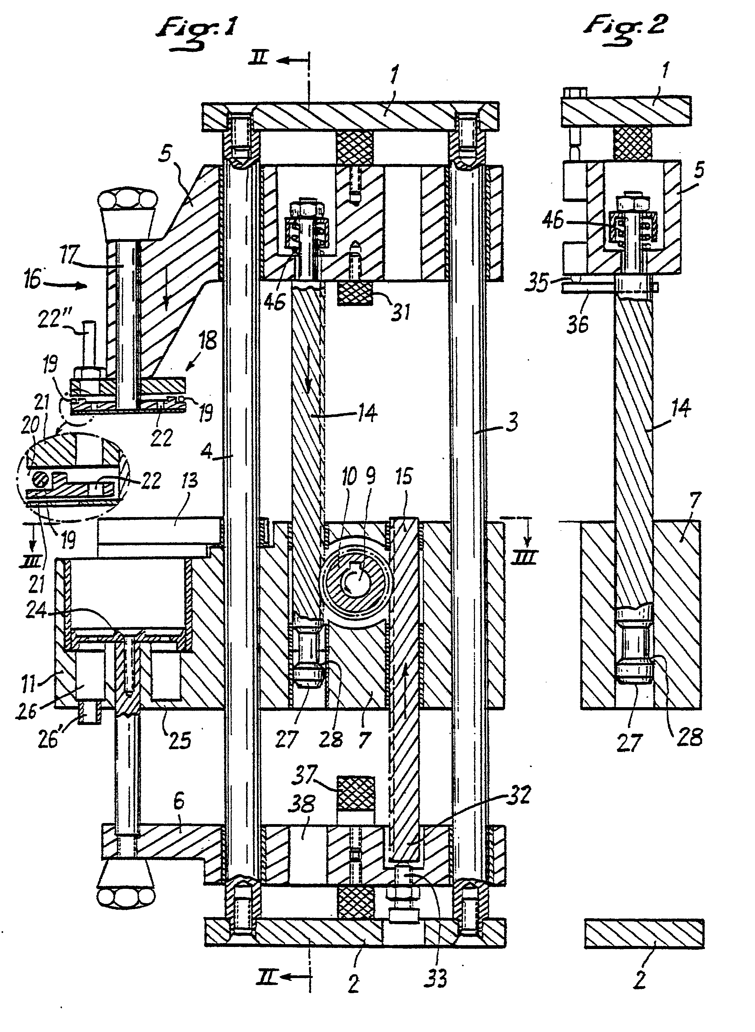

Dans la position de repos qui est représentée à la figure 1, les deux socles sont en position dégagée vers les extrémités de la carcasse, le socle supérieur 5 étant en position haute et le socle inférieur 6 est en position basse.

Dans cette position la chambre de percolation 11 au repos est en attente de remplissage ; le cône de déversement 12 est lui-même en position d'attente au-dessus de la chambre 11 et le cycle commence avec le déversement de la poudre par le cône suivi par l'effacement de ce dernier vers une position latérale, dès que le socle 5 va amorcer sa descente comme indiqué ci-après.

La rotation du pignon 9 dans le sens de la flèche représentée à la figure 1 entraîne le mouvement des crémaillères à savoir la première crémaillère 14 et la seconde crémaillère 15 dans le sens indiqué par les flèches sur la figure 1.

Dans ce mouvement le socle supérieur 5 s'abaisse jusqu'à la rencontre du plateau 18 à la surface du café moulu situé en attente dans la chambre de percolation 11.

Lorsque le plateau 18 rencontre la surface de café, se produit l'effet de rapprochement des deux plans 21 et 21' composant le plateau 18 avec écrasement du joint torique 19 et contact d'étanchéité du plateau 18 appartenant au piston 16 obturant la chambre de percolation 11.

Le piston 16 se trouve donc en position fixe à l'arrêt en étant venu, butée contre la dose de café contenue dans la chambre de percolation 11.

Cependant le moteur continue à tourner et à entraîner vers le bas la crémaillère 14 selon la flèche de la figure 1, tandis que le piston d'obturation 16 se trouve lui en butée ou freiné par la dose de café qu'il a rencontrée au sein de la chambre de percolation ; dans ce mouvement relatif, la crémaillère 14 se déplace par rapport au socle 5 (solidaire du piston 16) en comprimant le ressort intermédiaire 26, jusqu'à l'actionnement d'un interrupteur qui ferme l'alimentation du moteur et arrête le mouvement de la crémaillère 14.

L'interrupteur est formé par exemple d'un contacteur 35 solidaire du socle 5 et venant porter sur la butée 36 solidaire du sommet de la crémaillère 14 et ceci pour la position détendue du ressort 26 (voir sur la figure 1 la représentation du socle 5 en position haute) ; dès que le piston 16-18 est en butée sur la dose de café dans la chambre 11, le socle 5 est bloqué tandis que la crémaillère 14 poursuit une course limitée en comprimant le ressort 26 ; dans ce mouvement relatif le contacteur 35 est dégagé de sa position d'appui sur la butée 36 ce qui ouvre le circuit d'alimentation du moteur et interrompt le mouvement de la crémaillère 14.

Le ressort 46 joue aussi le rôle de sûreté en permettant un débattement limité de l'ensemble piston 16-18 sous l'effet par exemple de la pression de vapeur dans la chambre 11 lors de la phase de percolation, sans répercuter ce mouvement sur le moteur ; ce dernier n'est donc pas arrêté sur une position bloquée.

On voit que grâce à ce dispositif le positionnement du piston 16 et plus spécialement du plateau 18 qui assure le tassement et la compression de la poudre au sein de la chambre 11 se fait automatiquement, indépendamment de toute pré-programmation, en fonction du niveau de la poudre au sein de la chambre.

Le liquide après percolation et ayant traversé le lit de produits solides est recueilli dans le collecteur 26 dans le fond 25 et évacué vers l'extérieur où il peut être recueilli de façon connue par un bec de déversement dans une tasse ou tout récipient approprié.

Le cycle programmé se poursuit alors avec le dégagement du piston 16 et l'évacuation du gâteau de filtration correspondant au marc présent dans la chambre de percolation 11.

Comme on le voit sur la figure 1, le moteur ayant été mis en fonctionnement dans un mouvement inverse du précédent, le pignon 10 tourne dans le sens des flèches indiquées sur la figure et les crémaillères respectivement, la première crémaillère 14 et la seconde crémaillère 15 sont entraînées dans un mouvement inverse du précédent c'est-à-dire que la première crémaillère 14 remonte tandis que la crémaillère 15 redescent.

Dans ce mouvement la première crémaillère 14 va entraînet le socle inférieur 6.

A cet effet on a prévu à la base de la première crémaillère 14, au-delà d'une face biseautée 27 par laquelle se termine la crémaillère, un épaulement biseauté en creux 28 coopérant avec les ergots formant cliquets 29 et 29' venant en saillie à l'intérieur de l'alésage 30 situé à l'aplomb de la base de la tête biseautée 27 de la première crémaillère 14, sur le socle inférieur 6.

Dans ces conditions lorsque la première crémaillère 14 arrive dans sa position basse la tête 27 vient s'engager dans l'alésage 30, les parois biseautées 27 venant repousser vers l'extérieur les cliquets 29 et 29' jusqu'à ce que l'épaulement 28 arrive au niveau desdits cliquets, permettant à ces derniers de reprendre élastiquement leur position d'extension vers l'intérieur de l'alésage 30.

Après engagement des cliquets 29 dans l'épaulement 28 la première crémaillère 14 peut poursuivre sa route pendant une course limitée, la crémaillère s'arrêtant comme précédemment décrit lorsque le plateau 18 arrive au contact du produit pulvérulent dans la chambre de percolation.

Et en toute hypothèse la butée d'amortissement élastiquement compressible 31 constituant une sécurité en venant en contact éventuel avec le bloc central fixe 7.

Dans le mouvement de remontée de la première crémaillère 14, l'épaulement 28 venant en appui contre les cliquets 29 entraîne alors le socle mobile 6 dans un mouvement d'élévation guidé par les colonnes 3 et 4 en entraînant par conséquent par l'intermédiaire de la tige 23 le fond de filtration mobile 24 à l'intérieur de la chambre 11.

Le mouvement de remontée se poursuit jusqu'à ce que le socle 6 vienne en butée sur la base inférieure du bloc central fixe 7 ; la résistance et le blocage qui en résultent provoquent alors la rétraction des cliquets 29,29' le long de la paroi biseautée de l'épaulement 28 en débrayant par conséquent le socle 6 par rapport au mouvement de la première crémaillère 14. De préférence le contact socle 6/bloc central 7 se fait par une butée d'amortissement 37 dont le positionnement en hauteur est réglable.

Ce désaccouplement est réglé de façon à intervenir lorsque le fond mobile de filtration 24 est arrivé en position haute c'est-à-dire sensiblement affleurant au niveau des bords supérieurs de la chambre de filtration 11, mouvement dans lequel il sort à l'extérieur le gateau de filtration constitué par les marcs de la percolation antérieure.

C'est alors que peut intervenir le mouvement de translation latérale de la racle 13 qui dégage le gateau de filtration latéralement le gateau étant évacué et recueilli dans un bac de récupération.

Le socle 6 est resté en position haute pendant ce temps.

Et immédiatement ensuite il est redescendu par l'action de la second crémaillère 15.

Cette dernière qui poursuit son mouvement descendant arrive alors au contact, par sa base 32 de la butée réglable 33 montée solidaire du socle 6 et dans son mouvement de descente la seconde crémaillère 15 repousse vers le bas le socle 6 jusqu'à ce que ce socle retrouve sa position inférieure ou position basse (telle que représentée sur la figure 1).

Dans ce mouvement le socle 6 redescendant entraîne avec lui par la tige 23 le fond de filtration 24 qui rejoint ainsi le fond de la chambre de percolation 11.

Avantageusement, l'appareil peut être couplé à une source de fluide alimentaire à haute température, notamment de vapeur d'eau, et constituée d'une chambre 61 alimentée en eau par une électrovanne 64, la chambre comportant une sonde 63 commandant ladite électrovanne 64 afin d'assurer une réserve d'eau 62 à un niveau constant, et la chambre comporte une sortie 72 pour évacuer la vapeur produite, une source d'alimentation 67,68 aboutissant aux bornes 65, 66 au contact desquelles est interposé le rideau 71 d'un matériau absorbant tel que laine de verre et dont la base est immergée dans la réserve 62 ; une sortie 74 munie d'un clapet de sécurité 75 étant prévue pour éviter toute surpression au sein de la chambre.

Le passage du courant dans le milieu absorbant 71 et imprégné d'eau provoque la vaporisation instantané de l'eau et la vapeur s'échappe par le conduit 72. Une minuterie 69 permet de temporiser la production de vapeur au temps nécessaire. Et une résistance variable 70 pourra permettre d'ajuster les caractéristiques du courant et donc la rapidité de vaporisation en fonction des besoins.

## Revendications

1 - Dispositif pour la percolation automatique et instantanée de liquides alimentaires et aptes à être débités par doses correspondant à une unité de consommation ou à un multiple de cette unité, du type comportant une chambre de percolation (11) ouverte par une face, une réserve de produits aromatiques de percolation et des moyens de déversement desdits produits dans ladite chambre, un piston d'obturation (18) apte à obturer la face ouverte de ladite chambre en comprimant la dose unitaire de produits de percolation contenus, ladite chambre étant apte à recevoir une source de fluide, notamment d'eau à température convenable, ladite chambre comportant un lit de filtration pourvu d'ouvertures pour le passage du liquide percolé vers une évacuation, un fond (24) de ladite chambre étant monté mobile et étant relié à cet effect à des moyens d'entraînement, le piston d'obturation (18) de la chambre d'une part et le fond mobile (24) d'autre part étant prévus avec des courses de déplacement d'axes colinéaires entre eux et colinéaires avec l'axe de la chambre, le piston d'obturation (18) et le fond mobile (24) étant entraînés dans au moins une partie de leurs mouvements, par un organe de manoeuvre (14) unique et commun respectivement au piston et au fond mobile, ce dernier étant monté solidaire d'un socle (6) apte à se déplacer verticalement le long d'organes de guidage (3, 4), fixes solidaires du bâti, ledit socle (6) étant apte à être couplé par des moyens de solidarisation à embrayage automatique (28, 29, 29') à l'organe commun de déplacement (14), ceci pour une course limitée correspondant au déplacement dudit fond dans la chambre (11) depuis sa position de repos vers la face ouverte de la chambre en vue de l'éjection du gateau de filtration caractérisé en ce qu'il comporte un organe de rappel constitué d'un organe de déplacement auxiliaire (15) dont la course est symétrique de celle de l'organe de déplacement principal (14), les deux organes de déplacement symétriques étant entraînés par un organe de manoeuvre commun tel qu'un pignon (10) embrayant sur les deux organes de déplacement, entraînés dans un mouvement symétrique inverse l'un de l'autre, ledit organe de déplacement auxiliaire étant apte à repousser le socle (6) et le fond mobile (24) pour les ramener en position de repos.

2 - Dispositif selon la revendication 1, caractérisé en ce que le piston d'obturation (18) de la chambre (11) est solidaire, par l'intermédiaire d'un organe ressort (46), d'un socle supérieur (5) monté mobile en déplacement vertical et entraîné par l'organe de déplacement vertical (14), ledit socle comportant un contacteur (35) asservi à la mise sous tension, à une valeur déterminée et réglable, du ressort (46), ledit contacteur étant apte à commander l'arrêt de l'organe d'entraînement vertical (14) et par conséquent l'arrêt du déplacement vertical dudit socle (5), de sorte que lorsque le piston bute sur un obstacle, par exemple la masse de produits solides déversés dans la chambre de percolation, cet arrêt du piston entraîne la mise sous tension du ressort et au-delà l'actionnement du contacteur et l'arrêt de la course verticale du socle, en assurant ainsi la compacité des produits soumis à percolation quel que soit leur dosage.

3 - Dispositif selon l'une des revendications 1 ou 2, caractérisé en ce qu'il comporte un organe d'entraînement unique constitué d'un moteur électrique à mouvement réversible (8), dont le pignon (10) monté sur l'arbre de sortie (9) est apte à engrener sur un premier organe d'entraînement vertical constitué d'une crémaillère verticale (14) d'une part et (par un contact diamétralement opposé au premier) sur un second organe d'entraînement vertical ou entraînement vertical auxiliaire constitué d'une seconde crémaillère (15) entraînée dans un mouvement symétrique et inverse de la première crémaillère (14), la première crémaillère étant montée solidaire, par l'intermédiaire dudit organe ressort (26), sur le socle supérieur (5) lui-même solidaire du sommet du piston (16, 18) d'obturation de la chambre de percolation, et ladite première crémaillère étant apte, par sa partie basse, à coopérer avec des organes d'embrayage automatique (29, 29') disposés sur le socle inférieur (6), lui-même solidaire du fond de filtration (24), lesdits organes d'embrayage automatique étant aptes à coupler ledit socle inférieur sur ladite première crémaillère lors de l'arrivée en position basse de cette dernière, la remontée de ladite première crémaillère étant ainsi apte à entraîner ledit socle inférieur et le fond de filtration qui lui est solidaire dans le parcours de remontée de ladite première crémaillère en entraînant le mouvement d'élévation du socle inférieur et du fond de filtration, remontant dans ladite chambre, pour provoquer le mouvement d'éjection du gateau de filtration.

4 - Dispositif selon la revendication 3, caractérisé en ce que les organes d'embrayage (7) pour l'accouplement de la base de la première crémaillère et du socle inférieur, sont constitués d'un épaulement biseauté (28) en épaisseur disposé à la base (17) de ladite première crémaillère et apte à recevoir au moins un et de préférence deux ou plus organes en relief tels que des cliquets (29, 29') effaçables montés sur un ressort dont la tête en saillie biseautée est portée par ledit socle inférieur (6), lesdits cliquets étant aptes à s'effacer devant l'extrémité inférieure biseautée (27) de ladite première crémaillère (14) pour s'engager derrière ledit épaulement (28) en entraînant le verrouillage unidirectionnel du socle (6) par rapport à ladite première crémaillère (14), la remontée de ladite première crémaillère entraînant en conséquence la remontée dudit socle (6) inférieur et du fond de filtration qui lui est solidaire, l'immobilisation du socle inférieur (6) venant à l'appui d'une butée fixe (35), et correspondant à l'arrivée du fond de filtration (24) en position haute étant apte à provoquer le dégagement desdits cliquets (29, 29′) par rapport audit épaulement (28) en débrayant le socle inférieur (6) par rapport à ladite première crémaillère (14) qui peut poursuivre sa course.

5 - Dispositif selon l'une des revendications 1 à 4, caractérisé en ce que la seconde crémaillère (15) est apte à être entraînée par le pignon (10) commun, dans un mouvement vertical inverse et symétrique de la première crémaillère, ladite seconde crémaillère étant apte, tandis que la première crémaillère (14) poursuit sa course ascentionnelle, à redescendre vers le bas et à repousser dans ce mouvement ledit socle inférieur (6) retournant vers sa position basse de repos, ramenant ainsi le fond de filtration à la base de la chambre de percolation, la course du socle inférieur entre sa position basse de repos et sa position haute correspondant à la hauteur de la chambre de percolation (11), la course du fond de filtration, asservie au socle inférieur, allant ainsi de sa position basse ou position de repos pour la phase de percolation vers sa position haute ou position d'éjection du gateau, pour laquelle ce dernier est sorti au-delà des bords supérieurs de la chambre de percolation.

6 - Dispositif selon l'une des revendications 1 à 5, caractérisé en ce qu'il comporte également des moyens de déversement (12) de la quantité de produits aromtiques en poudre et des moyens de dégagement latéral du gateau de filtration formés d'une racle (13), des moyens étant asservis à des organes d'entraînement entre une position effacée et latérale par rapport à la chambre et une position située à l'aplomb de ladite chambre de percolation, les moyens de manoeuvre associés étant synchronisés par rapport aux mouvements du piston d'obturation et du fond de filtration, de telle façon que les moyens de dégagement latéral du gateau de filtration parcourent la zone située immédiatement à l'aplomb de la chambre, en repoussant le gateau latéralement, lorsque le piston d'obturation d'une part et le fond de filtration d'autre part sont en position haute, les moyens de déversement des produits aromatiques pulvérulents étant aptes à être amenés en position active à l'aplomb de la chambre lorsque le piston est encore en position haute, le fond de filtration ayant été ramené en position basse.

7 - Dispositif selon l'une des revendications 1 à 6, caractérisé en ce qu'il comporte une source de fluide alimentaire à haute température, notamment de vapeur d'eau, et constituée d'une chambre 61 alimentée en eau par une électrovanne 64, la chambre comportant une sonde 63 commandant ladite électrovanne 64 afin d'assurer une réserve d'eau 62 à un niveau constant, et la chambre comporte une sortie 72 pour évacuer la vapeur produite, une source d'alimentation 67, 68 aboutissant aux bornes 65, 66 au contact desquelles est interposé le rideau 71 d'un matériau absorbant tel que laine de verre et dont la base est immergée dans la réserve 62 ; une sortie 74 munie d'un clapet de sécurité 75 étant prévue pour éviter toute surpression au sein de la chambre.

**Patentansprüche**

1. Vorrichtung zur automatischen und sofortigen Perkolation von Lebensmittelflüssigkeiten zur Abgabe nach Einzelmengen bzw. einem Mehrfachen solcher Einzelmengen, bestehend aus einer nach einer Perkolationskammer (11) mit seitlicher Öffnung, einem Vorratsbehälter für das zur Perkolation bestimmte Aromaprodukt sowie einer Einfüllvorrichtung für dieses Produkt in die besagte Perkolationskammer, einem Verschlußkolben (18) zum Verschließen der offenen Seite der Perkolationskammer und Komprimierung der Einzeldosis des darin enthaltenen Perkolationsproduktes, wobei die besagte Kammer eine Flüssigkeit – insbesondere Wasser – bei einer entsprechenden Temperatur aufnehmen kann und ein Filterbett besitzt, das mit Öffnungen zum Durchfluß der Perkolationsflüssigkeit zu einem Ausguß versehen ist, wobei der Boden (24) der besagten Kammer beweglich eingebaut ist und zu diesem Zweck mit einer Antriebsvorrichtung verbunden ist und einerseits der Verschlußkolben (18) der Kammer sowie andererseits der bewegliche Boden (24) einen Verlagerungsweg über zueinander und gegenüber der Kammerachse parallel verlaufende Führungen aufweisen, wobei der Verschlußkolben (18) und der bewegliche Boden (24) zu wenigstens einem Teil ihrer Bewegung von einem einzigen und gemeinsamen Verlagerungselement (14) versetzt werden und der Kammerboden mit einem Sockel (6) fest verbunden ist, der sich den fest mit dem Rahmen verbundenen Führungselementen (3, 4) entlang senkrecht auf- und abbewegt, wobei besagter Sockel über entsprechende Verbindungselemente mit automatischer Koppelung (28, 29, 29') mit dem gemeinsamen Verlagerungselement (14) fest verbunden ist, dies für einen begrenzten Weg, der dem Weg des besagten Bodens in der Kammer (11) von seiner Ruhelage zur offenen Seite der Kammer zum Zweck des Auswurfs der Filterrückstände entspricht, dadurch gekennzeichnet, daß er mit einem Rückholelement versehen ist, bestehend aus einem zusätzlichen Verlagerungselement (15), dessen Weg symmetrisch zu dem des Hauptverlagerungselements (14) verläuft, wobei beide symmetrischen Verlagerungselemente über ein gemeinsames Antriebselement wie etwa einem Ritzel (10) verlagert werden und die Bewegungsrichtung der beiden Verlagerungselemente gegenläufig ist, während das besagte Hilfsverlagerungselement den Sockel (6) und den beweglichen Boden (24) in ihre Ruhelage zurückschieben kann.

2. Vorrichtung gemäß Patentanspruch 1, dadurch gekennzeichnet, daß der Verschlußkolben (18) der Kammer (11) über ein Federelement (46) fest mit einem oberen Sockel (5) verbunden ist, der beweglich mit senkrechter Verlagerung eingebaut und über ein senkrechtes Verlagerungselement (14) angetrieben ist, wobei besagter Sockel einen Kontaktschalter besitzt, der beim Unterspannungsetzen mit einem einstellbaren Wert der Feder (46) gesteuert wird und in der Lage ist, das Anhalten des senkrechten Verlagerungselementes (14) und somit des sich senkrecht bewegenden Sockels (6) zu bewirken, so daß beim Anstoßen des Kolbens an ein Hindernis wie z.B. die Masse des festen in die Perkolationskammer eingegebenen Produktes dieses Anhalten des Kolbens das Unterspannungsetzen der Feder (46) und dadurch die Betätigung des Kontaktschalters auslöst und somit die senkrechte Verlagerung des Sockels beendet und somit die Kompaktheit des der Perkolation ausgesetzten Produktes bei beliebiger Dosierung gewährleistet.

3. Vorrichtung gemäß Patentanspruch 1 oder 2, dadurch gekennzeichnet, daß er ein einziges Antriebselement in Form eines umsteuerbaren Elektromotors (8) besitzt, dessen Ritzel (10) auf der Austrittswelle (9) einerseits in ein erstes senkrechtes Antriebselement in Form einer senkrechten Zahnstange (14) eingreift und andererseits (über einen genau gegenüberliegenden Kontakt) in ein zweites senkrechtes Antriebselement oder Hilfsantriebselement in Form einer zweiten Zahnstange (15) eingreift, welche in eine gegenüber der ersten Zahnstange (14) symmetrische und gegenläufige Bewegung versetzt wird, wobei die erste Zahnstange über das besagte Federelement (26) fest mit dem oberen Sockel (5) und dieser wiederum fest mit der Spitze des Verschlußkolbens (16, 18) der Perkolationskammer verbunden ist und die erste Zahnstange in ihrem unteren Teil mit den automatischen Kupplungselementen (29, 29') zusammenspielen kann, die auf dem unteren Sockel (6) angebracht sind, welcher wiederum fest mit dem Filterboden (24) verbunden ist, wobei die besagten automatischen Kupplungselemente den unteren Sockel an die erste Zahnstange ankuppeln können, wenn diese in ihre untere Lage gelangt und das Aufsteigen dieser Zahnstange somit die Aufwärtsbewegung des unteren Sockels und des damit fest verbundenen Filterbodens in die besagte Kammer und das Ausstoßen der Filterrückstände veranlaßt.

4. Vorrichtung gemäß Patentanspruch 3, dadurch gekennzeichnet, daß die Kupplungselemente (7) zum Ankoppeln der Zahnstangenunterseite an den unteren Sockel aus abgeschrägten Schulterelementen (28) an der Unterseite (17) der ersten Zahnstange bestehen, die mindestens ein, nach Möglichkeit jedoch zwei oder mehr Reliefelemente wie z.B. Einschnappelemente (29, 29') auf einer Feder, deren vorstehender Kopf abgeschrägt ist und von dem unteren Sockel (6) gehalten wird, wobei die besagten Einschnappelemente vor der abgeschrägten Unterseite der besagten ersten Zahnstange (14) zurückweichen und hinter der Schulter (28) einschnappen und somit die einseitige Verriegelung des Sockels (6) gegenüber der ersten Zahnstange (14) bewirken müssen, wobei das Aufsteigen der ersten Zahnstange (14) das Aufsteigen des unteren Sockels (6) und des Filterbodens bewirkt, während der Stillstand des unteren Sockels (6) beim Erreichen des festen Anschlages (35), was dem Erreichen der oberen Stellung des Filterbodens (24) entspricht, das Lösen besagter Einschnappelemente (29, 29') von den Schulterelementen (28) und das Auskuppeln des unteren Sockels (6) aus der ersten Zahnstange (14) bewirkt, welche ihren Weg fortsetzen kann.

5. Vorrichtung gemäß einer der Patentansprüche 1 bis 4, dadurch gekennzeichnet, daß die zweite Zahnstange (15) durch ein gemeinsames Ritzel (10) in einer Senkrechtbewegung, die symmetrisch und in Gegenrichtung zu der der ersten Zahnstange verläuft, angetrieben werden kann, wobei sich die zweite Zahnstange bei gleichzeitiger Aufwärtsbewegung der ersten Zahnstange (14) nach unten bewegen und dabei den unteren Sockel (6) in seine untere Ruhelage zurückschieben kann, wodurch auch der Filterboden in seine untere Lage in der Perkolationskammer versetzt wird, wobei der Weg zwischen unterer und oberer Position des unteren Sockels der Höhe der Perkolationskammer (11) entsprechen und der Weg des Filterbodens entsprechend dem des unteren Sockels von unten nach oben führt, wo er in der oberen Position die Filterrückstände auswirft, sobald er die Oberkante der Perkolationskammer überschritten hat.

6. Vorrichtung nach einem der Patentansprüche 1 bis 5, dadurch gekennzeichnet, daß sie ebenfalls über eine Einfüllvorrichtung (12) für die entsprechende Menge Perkolationsmittel in Pulverform und über seitliche Auswurfvorrichtungen für die Filterrückstände verfügt, die in Form eines Kratzers (13) ausgeführt ist, wobei diese Teile durch Antriebselemente zwischen einer ausgerückten Stellung seitlich der Perkolationskammer und einer Position senkrecht dazu bewegt werden und die zugeordneten Verlagerungselemente mit der Bewegung des Verschlußkolbens und des Filterbodens synchronisiert sind, so daß die seitliche Auswurfvorrichtung für die Filterrückstände den Bereich unmittelbar über der Perkolationskammer durchläuft und die Rückstände seitlich auswirft, während der Verschlußkolben einerseits und der Filterboden andererseits in sich ihrer oberen Position befinden und die die Einfüllvorrichtung der pulverförmigen Aromastoffe in ihre aktive Position über der Perkolationskammer gelangt, solange der Kolben sich noch in seiner oberen Stellung befindet, während der Filterboden seine untere Stellung wiedereingenommen hat.

7. Vorrichtung gemäß einem der Patentansprüche 1 bis 6, dadurch gekennzeichnet, daß sie eine Quelle für Lebensmittelflüssigkeit mit hoher Temperatur besitzt, insbesondere Wasserdampf, und aus einer über ein Elektroventil (64) mit Wasser versorgte Kammer (61) verfügt, wobei diese Kammer mit einer Sonde (63) versehen ist, durch die das Elektroventil (64) gesteuert wird, um einen Wasservorrat (62) in konstanter Höhe zu halten, und die Kammer über einen Auslaß (72) für den erzeugten Wasserdampf sowie über eine Spannungsversorgung (67, 68) an den Klemmen (65, 66) verfügt, an deren Kontaktstelle eine Isolierung (71) aus einem absormierenden Material wie z.B. Glaswolle angebracht ist und deren Unterteil in den Vorratsbehälter (62) eingetaucht ist, sowie ein Auslaß (74) mit einem Sicherheitsventil (75) zur Verhinderung von Überdruck in der Kammer.

## Claims

1. Device for the automatic and instantaneous percolation of alimentary liquids delivered in doses corresponding to a unit of consumption or a multiple of this unit, of the type comprising a percolation chamber (11) open on one face, a reserve for aromatic percolation products and means for pouring said products into said chamber, a closure piston (18) adapted to close the open face of said chamber by compressing the unit dose of percolation products it contains, said chamber being adapted to receive a source of fluid, particularly water at a suitable temperature, said chamber comprising a filtration bed with openings for the passage of the percolated liquid towards an outlet, a bottom (24) of said chamber being movably mounted and being connected for this purpose to drive means, the piston (18) for closing the chamber on the one hand and the movable bottom (24) on the other being provided with displacement strokes with axes colinear with each other and with the axis of the chamber, the closure piston (18) and the movable bottom (24) being driven in at least a part of their movements by a single operating member (14) common respectively to the piston and to the movable bottom, this latter being secured to a base (6) adapted for moving vertically along fixed guide members (3, 4) secured to the frame, said base (6) being adapted to be coupled by automatic engagement means (28, 29, 29') to the common displacement member (14), for a limited stroke corresponding to the displacement of said bottom in the chamber (11) from its rest position towards the open face of the chamber for ejecting the filtration cake, characterized in that it comprises a return member formed of an auxiliary displacement member (15) whose stroke is symmetrical with that of the main displacement member (14), the two symmetrical displacement members being driven by a common operating member such as a pinion (10) engaging the two displacement members, driven in a symmetrical movement reversely to one another, said auxiliary displacement member being adapted for pushing the base (6) and the movable bottom (24) back so as to bring them back into the rest position.

2. Device according to claim 1, characterized in that the piston (187) for closing the chamber (11) is secured, through a spring member (46) to an upper base (5) mounted movably for vertical displacement and driven by a vertical displacement member (14), said base comprising a contactor (35) slaved to the tensioning, to a given and adjustable value, of the spring (46), said contactor being adapted to control stopping of the vertical drive member (14) and consequently stopping of the vertical displacement of said base (5), so that when the piston meets an obstacle, for example the mass of solid products poured into the percolation chamber, such stopping of the piston causes tensioning of the spring and further the actuation of the contactor and stopping of the vertical stroke of the base, thus ensuring compacting of the products subjected to the percolation whatever their dosage.

3. Device according to one of claims 1 or 2, characterized in that it comprises a single drive member formed of an electric motor with reversible movement (18) whose pinion (10) mounted on the output shaft (9) is adapted to mesh with a first vertical drive member formed of a vertical rack (14), on the one hand and (by a contact diametrically opposite the first) with a second vertical drive member or auxiliary vertical drive member formed of a second rack (15) driven with a movement which is symmetrical to and the reverse of the first rack (14), the first rack being secured, through said spring member (26) to the upper base (5) itself secured to the top of the piston (16, 18) closing the percolation chamber, and said first rack being adapted, by its low part, to cooperate with automatic engagement members (29, 29') disposed on the lower base (6) itself fast with the filtration bottom (24), said automatic engagement members being adapted for coupling said lower base to said first rack, when the latter arrives in the bottom position, raising of said first rack thus being adapted to drive said lower base and the filtration bottom which is fast therewith in the upward path of the first rack by causing the upward movement of the lower base and of the filtration bottom, ascending in said chamber, to cause the movement for ejecting the filtration cake.

4. Device according to claim 3, characterized in that the engagement members (7) for coupling the base of the first rack and the lower base are formed of a shoulder (28) bevelled in the thickness direction, disposed at the base (17) of said first rack and adapted to receive at least one and preferably two or more relief members such as retractable pawls (29, 29') mounted on a spring whose bevelled projecting head is carried by said lower base (6), said pawls being adapted to retract in front of the lower bevelled end (27) of said first rack (14) for engagement behind said shoulder (28) while causing unidirectional locking of the base (6) with respect to said first rack (14), the upward movement of said first rack consequently causing the upward movement of said lower base (6) and of the filtration bottom which is fast therewith, immobilization of the lower base (6) coming into abutment against a fixed stop (35) and corresponding to the arrival of the filtration bottom (24) into the top position, being adapted to cause disengagement of said pawls (29, 29') with respect to said shoulder (28) by disengaging the lower base (6) with respect to said first rack (14) which may continue its stroke.

5. Device according to one of claims 1 to 4, characterized in that the second rack (15) is adapted to be driven by the common pinion (10) in a vertical movement the reverse of and symmetrical to the first rack, said second rack being adapted, while the first rack (14) continues its upward stroke, to move downwards and in this movement to push said lower base (6) returning to its low rest position, thus bringing the filtration bottom to the base of the percolation chamber, the stroke of the lower base between its low rest position and its top position corresponding to the height of the percolation chamber (11), the stroke of the filtration bottom, slaved to the lower base, thus going from its low position or rest position for the percolation phase towards its top position or cake ejection position in which the cake is brought out beyond the upper edges of the percolation chamber.

6. Device according to one of claims 1 to 5, characterized in that it also comprises means (12) for pouring the amount of powdered aromatic products and means for laterally disengaging the filtration cake formed of a rake (13), means being slaved to drive members between a retracted and lateral position with respect to the chamber and a position situated in line with the percolation chamber, the associated operating means being synchronized with respect to the movements of the closure piston and the filtration bottom so that the means for lateral disengagement of the filtration cake travel over the zone situated immediately in line with the chamber, while pushing the cake back laterally, when the closure piston on the one hand and the filtration bottom on the other are in the top position, the means for pouring the powdered aromatic products being adapted to be brought into an active position in line with the chamber when the piston is again in its top position, the filtration bottom having been brought back to the low position.

7. Device according to one of claims 1 to 6, characterized in that it comprises a source of alimentary fluid at high temperature, particularly steam, formed of a chamber (61) fed with water by an electrovalve 64, the chamber comprising a probe 63 controlling said electrovalve 64 in order to provide a water reserve 62 at constant level, and the chamber comprises an outlet 72 for discharging the steam produced, a feed source 67, 68 extending as far as the terminals 65, 66 in contact with which is interposed the curtain 71 made from an absorbent material such as glass wool and whose base is immersed in the reserve 62; an outlet 74 having a safety valve 75 being provided for avoiding any overpressure within the chamber.

*Fig. 1*

*Fig. 2*

EP 0 237 399 B1

Fig.3

Fig.4

Fig. 5

EP 0 237 399 B1

*Fig.6*

*Fig. 7*

*Fig. 8*

Fig. 9